# EUROPÄISCHE PATENTSCHRIFT

(11) **EP 3 897 319 B1**
(45) Veröffentlichungstag und Bekanntmachung des Hinweises auf die Patenterteilung: **03.08.2022**
(21) Anmeldenummer: 19832273.7
(22) Anmeldetag: 18.12.2019
(51) Int. Cl.: A47J 42/10, A47J 42/20

(54) **MAHLWERK MIT KONVEX GEKRÜMMTEN MAHLVORSPRÜNGEN**
GRINDING MILL HAVING CONVEXLY CURVED MILLING PROJECTIONS
BROYEUR COMPRENANT DES PROTUBÉRANCES DE BROYAGE COURBÉES DE MANIÈRE CONVEXE

(30) Priorität: 18.12.2018 AT 511282018
(43) Veröffentlichungstag der Anmeldung: 27.10.2021
(73) Patentinhaber: Joma Kunststofftechnik GmbH, 2345 Brunn am Gebirge (AT)
(72) Erfinder: FRIES, Rudolf, 2572 Kaumberg (AT)
(74) Vertreter: SONN Patentanwälte OG
(86) Internationale Anmeldenummer: PCT/AT2019/060440
(87) Internationale Veröffentlichungsnummer: WO 2020/124114

(56) Entgegenhaltungen:
- EP-A1- 2 474 256
- EP-B1- 2 474 256
- DE-U1-202006 004 568
- US-A1- 2017 319 009

## Beschreibung

Die Erfindung betrifft ein Mahlwerk zum Zermahlen von Gewürzen, insbesondere Salz, mit einem Stator und einem konzentrisch dazu angeordneten, drehbar gelagerten und im Wesentlichen kegelstumpfförmigen Rotor.

Des Weiteren betrifft die Erfindung eine Gewürzmühle zum Zermahlen von Gewürzen, insbesondere Salz, mit einem Behältnis für das Gewürz.

Mahlwerke dieser Art sind aus dem Stand der Technik seit Längerem bekannt und weisen typischerweise am Rotor und/oder am Stator scharfkantige Schneidezähne auf, mit denen das Gewürz, im Folgenden auch als Mahlgut bezeichnet, zerschnitten und dadurch zerkleinert wird. Das Zerschneiden des Mahlguts hat bei manchen Gewürzen, wie beispielsweise Pfeffer, den Vorteil, dass die im Mahlgut befindlichen Aromen über einen längeren Zeitraum erhalten bleiben. Bei harten Gewürzen hat sich jedoch herausgestellt, dass die Schneidezähne relativ rasch abgenützt werden und der entstehende Abrieb gemeinsam mit dem Gewürz aus dem Mahlwerk befördert wird und schließlich auf den Nahrungsmitteln landet.

Zudem hat sich herausgestellt, dass bei der Verwendung von harten Gewürzen die Körnung des gemahlenen Gewürzes nicht konstant gehalten werden kann, da die Schneidezähne im Laufe der Zeit durch das Mahlgut immer stärker abgenutzt werden und dadurch abstumpfen.

Ein Mahlwerk der eingangs erwähnten Art wird unter anderem in der EP 2 474 256 A1 gezeigt. Sowohl der Rotor als auch der Stator besitzen längliche, scharfkantige Schneidezähne mit deren Hilfe das Mahlgut zerschnitten und dadurch zerkleinert wird. Nachteiligerweise werden bei der Verwendung von harten Gewürzen wie Salz, wie oben erläutert, die Schneidezähne rasch abgenützt, wodurch sich die Körnung des gemahlenen Salzes im Laufe der Zeit ändert und der Abrieb mit dem gemahlenen Gewürz im Essen landet.

Ein weiteres Mahlwerk für Gewürze ist aus der US 2017/0319009 A1 bekannt. Das Mahlwerk besitzt jedoch keinen im Wesentlichen kegelstumpfförmigen Rotor und weist Mahlzähne auf, die aus Stegen gebildet sind.

Aus der DE 20 2006 004 568 U1 ist ein Mahlwerk für eine vollautomatische Kaffeemaschine bekannt.

Es ist daher Aufgabe der vorliegenden Erfindung, die Nachteile des Standes der Technik zu lindern bzw. zu beseitigen. Insbesondere ist es Aufgabe der vorliegenden Erfindung, ein Mahlwerk zu schaffen, bei dem der Abrieb des Rotors und des Stators beim Mahlen von harten Gewürzen minimiert bzw. vermieden wird ohne dabei den Durchsatz des Mahlgutes zu reduzieren.

Gelöst wird diese Aufgabe dadurch, dass der Stator und der Rotor zumindest abschnittsweise im Querschnitt konvex gekrümmte Mahlvorsprünge aufweisen, deren Oberflächen frei von Unstetigkeiten sind. Durch eine derartige Ausgestaltung der Mahlvorsprünge wird beim Verdrehen des Rotors das Gewürz zerdrückt.

Erfindungsgemäß ist daher vorgesehen, an Stelle von Schneidezähnen, wie im Stand der Technik üblich, konvex gekrümmte Mahlvorsprünge vorzusehen, deren Oberflächen frei von Unstetigkeiten sind. Es hat sich nämlich gezeigt, dass insbesondere für das Zerkleinern von Gewürzen mit kristalliner Struktur, wie beispielsweise Salz, keine scharfkantigen Schneidezähne im Mahlwerk benötigt werden, da derartige Gewürze, bedingt durch deren Struktur, Sollbruchstellen aufweisen, an denen entlang das Kristallgefüge bei Druckanwendung aufbricht. Es genügt daher, mit Hilfe von stumpfen Oberflächen, wie den erfindungsgemäßen Mahlvorsprüngen, lediglich Druck auf kristalline bzw. mineralische Gewürze auszuüben, wodurch diese von selbst in kleine Teile zerbrechen. Selbstverständlich können auch andere Gewürze als Salz, insbesondere Steinsalz, oder Pfeffer, durch die stumpfen Mahlvorsprünge aufgebrochen bzw. zerdrückt werden. Insbesondere sind unter Unstetigkeiten daher sprunghafte Änderungen im Querschnittsverlauf der Oberfläche eines Mahlvorsprungs zu verstehen. Bei dem erfindungsgemäßen Mahlwerk sind keine Unstetigkeiten wie scharfe Kanten, spitzwinkelige Hinterschneidungen oder spitze Vorsprünge an den mit dem Mahlgut in Kontakt tretenden Oberflächen vorgesehen, welche beim Stand der Technik üblicherweise im Laufe der Zeit abgenutzt werden. Dadurch kann der Abrieb beim Mahlen verringert oder gar gänzlich vermieden werden ohne dabei den Mahldurchsatz zu reduzieren. Das erfindungsgemäße Mahlwerk zeichnet sich insbesondere durch eine erhöhte Widerstandsfähigkeit gegenüber Abnützung und eine längere Lebensdauer aus.

Ausdrücke wie "oben" und "unten" bzw. Abwandlungen davon beziehen sich auf den bestimmungsgemäßen Verwendungszustand des Mahlwerkes. "Oben" tritt dabei das unvermahlene Mahlgut bzw. Gewürz in das Mahlwerk ein, "unten" tritt das zermahlene Mahlgut bzw. Gewürz schließlich aus dem Mahlwerk wieder aus.

Die erfindungsgemäßen Mahlvorsprünge sind im Querschnitt zumindest abschnittsweise konvex gekrümmt, d.h. abschnittsweise nach außen gewölbt, ohne dabei Ecken zu bilden. Wesentlich ist, dass die Mahlvorsprünge keine spitzen Kanten, Vorsprünge oder Hinterschneidungen, sondern glatte Oberflächen aufweisen. In einer Ausführungsform sind die Mahlvorsprünge über den gesamten Querschnitt konvex gekrümmt, ohne spitze Kanten, Vorsprünge oder Hinterschneidungen zu bilden. Bei dem erfindungsgemäßen Mahlwerk weisen sowohl der Rotor, als auch der Stator die erfindungsgemäßen Mahlvorsprünge auf, wobei unterschiedliche Formen von Mahlvorsprüngen am Rotor und am Stator vorgesehen sein können. Auch an derselben Einheit (Rotor und Stator) können verschiedenartige Mahlvorsprünge mit unterschiedlichen Formen vorgesehen sein. Damit die Form der Mahlvorsprünge längerfristig erhalten bleibt, bestehen diese vorzugsweise aus Polyoxymethylen (POM); alternativ ist auch eine Herstellung aus Polycarbonat (PC), Polyethylenterephthalat (PET), Polystyrol (PS), Polymethylmethacrylat (PMMA), Polyacrylnitrilbutadienstyrol (ABS), Polylactid (PLA) oder anderen geeigneten Kunststoffen denkbar. Insbesondere können der Rotor und/oder der Stator und/oder die Mahlvorsprünge aus demselben Material gefertigt sein.

In einer bevorzugten Ausführungsform ist der Rotor innerhalb des Stators angeordnet (Innenläufer). Alternativ kann der Rotor außen um den Stator angeordnet sein (Außenläufer). In beiden Fällen ist stets ein umlaufender Spalt zwischen Rotor und Stator vorgesehen, sodass sich der Rotor drehen kann. Während der drehbar gelagerte Rotor gedreht wird, gleiten die Mahlvorsprünge des Rotors an den Mahlvorsprüngen des Stators vorbei. Wenn ein Mahlvorsprung des Stators einem Mahlvorsprung des Rotors gegenüberliegt, ist der Spalt an dieser Stelle verringert, wodurch dazwischen befindliches Mahlgut zerdrückt wird. Die Breite des Spalts variiert demnach über den Umfang. Wichtig ist, dass stets ein Spalt zwischen Rotor und Stator vorhanden ist, sodass der Rotor sich drehen kann und das Mahlgut durch das Mahlwerk gelangt. Rotor und Stator weisen jeweils eine Basisfläche auf, an der die Mahlvorsprünge angeordnet sind. Bei einem hohlzylinderförmigen Stator ist die Basisfläche die Innenfläche. Bei einem kegel-(stumpf-) oder zylinderförmigen Rotor ist die Basisfläche die Mantelfläche. Bei der Außenläufervariante ist es entsprechend umgekehrt.

In einer bevorzugten Ausführungsform ist vorgesehen, dass die Querschnitte der Mahlvorsprünge entlang der gesamten Längsausdehnung der Mahlvorsprünge zumindest abschnittsweise konvex gekrümmt sind. Demnach weisen die Mahlvorsprünge bevorzugt eine längliche Form auf und sind im Querschnitt über die gesamte Länge abschnittsweise, in einer bevorzugten Ausführungsform sogar im gesamten Querschnitt, konvex geformt. Die länglichen Mahlvorsprünge können parallel orientiert sein. Die Längsachse der Mahlvorsprünge weist bevorzugt im Wesentlichen in die gleiche Richtung wie die Längsachse des Rotors oder des Stators.

Um den Abrieb noch weiter zu reduzieren, ist es günstig, wenn das Mahlwerk eine Eingangsseite und eine Ausgangsseite für das Gewürz aufweist und die der Eingangsseite zugewandten Stirnseiten der Mahlvorsprünge konvex gekrümmt sind. Somit trifft das über die Eingangsseite in das Mahlwerk eingeführte Gewürz auf konvex gekrümmte Stirnseiten, die frei von spitzen Kanten, Ecken und spitzwinkeligen Hinterschneidungen sind. Als Eingangsseite des Mahlwerks wird dabei jene Seite bezeichnet, an der das ungemahlene Gewürz in das Mahlwerk eintritt. Üblicherweise ist das Mahlwerk an der Eingangsseite über ein Gehäuse mit einem Behältnis verbunden.

Um die Rotation des Rotors zu ermöglichen und den Durchsatz des Gewürzes durch das Mahlwerk zu begünstigen, hat es sich als vorteilhaft erwiesen, wenn der Rotor und der Stator derart angeordnet sind, dass zu jedem Zeitpunkt während des Verdrehens des Rotors die Mahlvorsprünge des Rotors von den Mahlvorsprüngen des Stators beabstandet sind, insbesondere mindestens 0,1 mm beabstandet sind. Dies bedeutet nicht, dass der Abstand zwischen den Mahlvorsprüngen des Rotors und den Mahlvorsprüngen des Stators konstant sein müsste. Es tritt aber zu keinem Zeitpunkt ein direkter Kontakt zwischen den Mahlvorsprüngen Rotors und des Stators auf. Je nach Form des Rotors und des Stators kann der Abstand sowohl entlang des Umfangs des Stators bzw. des Rotors als auch entlang deren Längsrichtung variieren.

Günstig ist, wenn die Querschnitte der Mahlvorsprünge des Stators Kreissegmente darstellen, deren Radius in einem Bereich zwischen 0,1 mm und 70 mm, bevorzugt zwischen 0,15 mm und 60 mm, noch mehr bevorzugt zwischen 0,2 mm und 50 mm liegt. Vorzugsweise liegen die Radien der Kreissegmente zwischen 0,5 mm und 6 mm, noch mehr bevorzugt zwischen 0,8 mm und 5 mm. Diese Werte haben sich hinsichtlich einer Minimierung des Abriebs ohne Reduktion der zermahlenen Menge als besonders günstig erwiesen. Der Radius des Kreissegments bezieht sich auf den Kreisbogen. Im Stand der Technik weisen Mahlwerke üblicherweise scharfkantige Zähne mit Radien unter 0,1 mm auf und zerschneiden daher die Gewürze während des Zermahlens. Beim erfindungsgemäßen Mahlwerk werden die Gewürze jedoch zerdrückt. Die Mahlvorsprünge des Stators können jeweils voneinander verschiedene Querschnitte aufweisen. Es können auch Gruppen mit jeweils gleichen Querschnitten vorgesehen sein. Wichtig ist bei dieser Ausführungsform lediglich, dass die Querschnitte Kreissegmente, d.h. Ausschnitte eines Kreises, darstellen. Bevorzugt stellen die Querschnitte der Mahlvorsprünge des Stators im Wesentlichen über ihre gesamte Länge Kreissegmente dar.

Um ein Verkeilen des unvermahlenen Gewürzes zu vermeiden, kann es vorteilhaft sein, wenn der Stator in einen Bereich zur Grobvermahlung mit ersten Stator-Mahlvorsprüngen und einen Bereich zur Feinvermahlung mit zweiten Stator-Mahlvorsprüngen unterteilt ist, wobei vorzugsweise im Bereich zur Grobvermahlung die ersten Stator-Mahlvorsprünge voneinander beabstandet sind. Durch den Abstand zwischen den ersten Stator-Mahlvorsprüngen findet zunächst eine grobe Vermahlung des Gewürzes statt. Bevorzugt schließt der Bereich zur Feinvermahlung unmittelbar an den Bereich zur Grobvermahlung an. Natürlich können als Übergang auch weitere Bereiche zur feineren Abstufung zwischen dem Bereich zur Grobvermahlung und dem Bereich zur Feinvermahlung vorgesehen sein. Im Bereich zur Feinvermahlung sind die zweiten Stator-Mahlvorsprünge dichter aneinander geordnet als die ersten Stator-Mahlvorsprünge im Bereich zur Grobvermahlung. Vorzugsweise schließen die zweiten Stator-Mahlvorsprünge direkt aneinander an bzw. gehen ineinander über.

Sämtliche Mahlvorsprünge am Stator weisen eine maximale Höhe zur Basisfläche des Stators auf, welche bei Stator-Mahlvorsprüngen mit Querschnitten, die Kreissegmente darstellen, dem Radius entspricht. Das Verhältnis der maximalen Höhe der ersten Stator-Mahlvorsprünge zur maximalen Höhe der zweiten Stator-Mahlvorsprünge liegt bevorzugt im Bereich zwischen 1:0.25 und 1:2, insbesondere bei 1:1,2.

Die ersten bzw. zweiten Stator-Mahlvorsprünge können auch zur Basisfläche hin geneigt sein, vorzugsweise in Längsrichtung.

Für einen besonders hohen Mahldurchsatz hat es sich als günstig erwiesen, wenn das Verhältnis der Anzahl an ersten Stator-Mahlvorsprüngen zur Anzahl an zweiten Stator-Mahlvorsprüngen im Bereich zwischen 1:1 und 1:15, bevorzugt zwischen 1:1 und 1:10, insbesondere bei 1:2, liegt. Demnach ist die Anzahl an zweiten Stator-Mahlvorsprüngen zumindest so hoch wie die Anzahl an ersten Stator-Mahlvorsprüngen. Bevorzugt ist die Anzahl an zweiten Stator-Mahlvorsprüngen höher als die Anzahl an ersten Stator-Mahlvorsprüngen. Dadurch findet quasi stufenweise eine feinere Zermahlung des Gewürzes statt.

In einer bevorzugten Ausführungsform ist vorgesehen, dass der Rotor eine Basisfläche 59 aufweist und in einen Bereich zur Grobvermahlung mit ersten Rotor-Mahlvorsprüngen und einen Bereich zur Feinvermahlung mit zweiten Rotor-Mahlvorsprüngen unterteilt ist, wobei vorzugsweise im Bereich zur Grobvermahlung die ersten Rotor-Mahlvorsprünge voneinander beabstandet sind. Insbesondere ist es günstig - sofern beim Stator ebenfalls eine Unterteilung vorgesehen ist - wenn der Bereich zur Grobvermahlung des Rotors mit dem Bereich zur Grobvermahlung des Stators zusammenwirkt. Gleiches gilt für die Bereiche zur Feinvermahlung. Natürlich können als Übergang auch weitere Bereiche zur feineren Abstufung zwischen dem Bereich zur Grobvermahlung und dem Bereich zur Feinvermahlung vorgesehen sein.

Sämtliche Mahlvorsprünge am Rotor weisen eine maximale Höhe zur Basisfläche des Rotors auf. Das Verhältnis der maximalen Höhe der ersten Rotor-Mahlvorsprünge zur maximalen Höhe der zweiten Rotor-Mahlvorsprünge liegt bevorzugt im Bereich zwischen 1:0.25 und 1:2, insbesondere bei 1:1,3.

Die ersten bzw. zweiten Rotor-Mahlvorsprünge können auch zur Basisfläche hin geneigt sein, vorzugsweise in Längsrichtung.

Das Verhältnis der Anzahl an ersten Rotor-Mahlvorsprüngen zur Anzahl an zweiten Rotor-Mahlvorsprüngen kann im Bereich zwischen 1:1 und 1:15, bevorzugt zwischen 1:1 und 1:10, insbesondere bei 1:3, liegen. Demnach ist die Anzahl an zweiten Rotor-Mahlvorsprüngen zumindest so hoch wie die Anzahl an ersten Rotor-Mahlvorsprüngen. Bevorzugt ist die Anzahl an zweiten Rotor-Mahlvorsprüngen höher als die Anzahl an ersten Rotor-Mahlvorsprüngen. Dadurch findet quasi stufenweise eine feinere Zermahlung des Gewürzes statt.

Um eine möglichst sanfte Feinvermahlung zu begünstigen, ist es vorteilhaft, wenn die Querschnitte der zweiten Rotor-Mahlvorsprünge einen im Wesentlichen eben ansteigenden Abschnitt und einen konvex gekrümmten, abfallenden Abschnitt aufweisen. Die Drehrichtung des Rotors zum Mahlen erfolgt dann dergestalt, dass die konvex gekrümmten, abfallenden Abschnitte in Drehrichtung zuerst liegen. Der im Wesentlichen eben ansteigende Abschnitt schließt an den konvex gekrümmten, abfallenden Abschnitt an. Die Steigung des im Wesentlichen eben ansteigenden Abschnitts ist im Wesentlichen linear.

Zudem können die ersten Rotor-Mahlvorsprünge jeweils einen ebenen Abschnitt und zwei gegenüberliegende, an den ebenen Abschnitt angrenzende konvex gekrümmte Flanken aufweisen. Der ebene Abschnitt ist krümmungsfrei.

Es ist vorteilhaft, wenn die konvex gekrümmten Flanken im Übergangsbereich zwischen den konvex gekrümmten Flanken und der Basisfläche des Rotors mit der Basisfläche einen Winkel innerhalb der ersten Rotor-Mahlvorsprünge aufspannen, der kleiner als 90° ist. Mit anderen Worten: Der Winkel, den die Anstiege der konvex gekrümmten Flanken im Übergang zur Basisfläche mit der Basisfläche einschließen, (also deren dort befindliche Tangenten) liegt unter 90°, sodass keine spitzwinkeligen Hinterschneidungen entstehen.

Um das Mahlgut während der Rotation des Rotors zu führen, ist es günstig, wenn die Mahlvorsprünge des Rotors schraubenförmig um eine Längsachse des Rotors verdreht sind. Die Verdrehung kann dabei 0°-90°, bevorzugt mindestens 10°, insbesondere 65°, um die Längsachse betragen.

Sofern getrennte Bereiche zur Grobvermahlung und Feinvermahlung vorhanden sind, kann ein sanfterer Übergang zwischen den Bereichen erzielt werden, wenn der Rotor von einer Unterseite zu einer Oberseite hin konisch zusammenläuft. Die Oberseite ist dabei der Eingangsseite und die Unterseite der Ausgangsseite des Mahlwerks zugewandt. Demnach weist der Rotor im Wesentlichen (bis auf die Mahlvorsprünge) die Form eines Kegelstumpfes auf, dessen Grundfläche mit dem größeren Durchmesser der Ausgangsseite zugewandt ist und somit der Unterseite entspricht. Durch die Kegelstumpfform wird das Mahlgut während des Mahlens in einen immer enger werdenden Spalt zwischen Stator und Rotor befördert und zerdrückt. Natürlich kann auch der Stator konisch von einer Seite zur anderen zusammenlaufen, um einen zunehmend enger werdenden Spalt zu erzeugen. In einer besonders bevorzugten Ausführungsform weist der Stator die Form eines Hohlzylinders auf. Der Rotor weist die Form eines Kegelstumpfes auf.

Bevorzugt schließt der im Wesentlichen eben ansteigende Abschnitt insbesondere von der Unterseite des Rotors betrachtet im Übergangsbereich zur Basisfläche des Rotors mit einer Tangente an der Basisfläche einen Winkel α in mathematisch positive Richtung von der Tangente an der Basisfläche weggezählt von maximal 90°, besonders bevorzugt von maximal 45°, noch mehr bevorzugt von maximal 20°, ein. Mit anderen Worten schließt die Oberfläche des eben ansteigenden Abschnitts mit der darunterliegenden Tangente an der Basisfläche den Winkel α ein. Die Tangente tangiert die Basisfläche dabei im Übergangsbereich zwischen dem eben ansteigenden Abschnitt und der Basisfläche.

Des Weiteren ist es günstig, wenn der konvex gekrümmte, abfallende Abschnitt insbesondere von der Unterseite des Rotors betrachtet im Übergangsbereich zur Basisfläche des Rotors mit einer Tangente an der Basisfläche einen Winkel β in mathematisch positive Richtung von der Tangente an der Basisfläche weggezählt von minimal 90°, besonders bevorzugt von minimal 100°, noch mehr bevorzugt von minimal 120° ein, maximal aber 180°, aufspannt. Die Tangente tangiert die Basisfläche dabei im Übergangsbereich zwischen dem gekrümmten, abfallenden Abschnitt und der Basisfläche. Der Winkel β wird quasi, im Unterschied zum Winkel a, außerhalb des zweiten Rotor-Mahlvorsprunges von der Oberfläche der Basisfläche und der Oberfläche des gekrümmten, abfallenden Abschnitts aufgespannt. Da der konvex gekrümmte Abschnitt gekrümmt ist, wird der Winkel β ebenfalls zu einer Tangente an dem konvex gekrümmten Abschnitt im Übergangsbereich zur Basisfläche gezählt.

Vorzugsweise weist die kleinste Krümmung der Querschnitte der Mahlvorsprünge des Stators und/oder des Rotors einen Kurvenradius R auf, der zumindest 0,5 mm, noch mehr bevorzugt zumindest 0,6 mm, zumindest 0,7 mm, zumindest 0,8 mm oder zumindest 0,9 mm beträgt. Mit anderen Worten sind die Mahlvorsprünge frei von Kanten, Ecken, Spitzen oder Vorsprüngen, deren Krümmungsradien kleiner als 0,5 mm, 0,6 mm, 0, 7 mm, 0,8 mm oder 0,9 mm sind.

Um den Abrieb durch das Mahlgut zu minimieren oder gänzlich zu vermeiden, ist es vorteilhaft, wenn die kleinste Krümmung der Querschnitte der Mahlvorsprünge einen Kurvenradius R aufweist, der in einem Bereich zwischen 0,1 mm und 70 mm, bevorzugt zwischen 0,15 mm und 60 mm, noch mehr bevorzugt zwischen 0,2 mm und 50 mm oder 1 mm und 20 mm, liegt. Demnach weisen die Querschnitte der Mahlvorsprünge jedenfalls keine Kanten, Ecken oder Vorsprünge auf, deren Radien kleiner als 0,1 mm, bevorzugt kleiner als 0,15 mm, noch mehr bevorzugt kleiner als 0,2 mm sind. Auch die der Eingangsseite des Mahlwerks zugewandten Stirnseiten sämtlicher Mahlvorsprünge weisen keine Kanten, Ecken oder Vorsprünge auf, deren Radien kleiner als 0,1 mm, bevorzugt kleiner als 0,15 mm, noch mehr bevorzugt kleiner als 0,2 mm sind.

Des Weiteren wird die oben gestellte Aufgabe durch eine Gewürzmühle der eingangs erwähnten Art gelöst, welche ein Mahlwerk nach den obigen Ausführungen aufweist.

Im Folgenden wird eine besonders bevorzugte Ausführungsform der vorliegenden Erfindung an Hand von Figuren beschrieben, auf die sie allerdings nicht beschränkt sein soll.
Fig. 1 zeigt einen erfindungsgemäßen Stator im Längsschnitt.
Fig. 2 zeigt einen erfindungsgemäßen Stator in einer Ansicht von unten.
Fig. 3 zeigt einen erfindungsgemäßen Stator in einer Schrägansicht von oben.
Fig. 4 zeigt einen erfindungsgemäßen Stator in einer Ansicht von oben.
Fig. 5 zeigt einen erfindungsgemäßen Rotor in einer Schrägansicht von oben.
Fig. 6 zeigt einen erfindungsgemäßen Rotor in einer Ansicht von unten.
Fig. 7 zeigt einen erfindungsgemäßen Rotor in einer Schrägansicht von unten.
Fig. 8 zeigt ein erfindungsgemäßes Mahlwerk mit einem Rotor und einem Stator in einer Ansicht von unten.
Fig. 9 zeigt ein erfindungsgemäßes Mahlwerk mit einem Rotor und einem Stator in einer Schrägansicht von oben.
Fig. 10 zeigt ein erfindungsgemäßes Mahlwerk im Querschnitt in einem Gehäuse.

Ausdrücke wie "oben" und "unten" bzw. Abwandlungen davon beziehen sich auf den bestimmungsgemäßen Verwendungszustand des Mahlwerkes. "Oben" tritt dabei das unvermahlene Mahlgut bzw. Gewürz in das Mahlwerk ein, "unten" tritt das zermahlene Mahlgut bzw. Gewürz schließlich aus dem Mahlwerk wieder aus.

In den Figuren werden die einzelnen Teile eines erfindungsgemäßen Mahlwerks 15 zum Teil separat dargestellt. Der Übersicht halber wurde bei den Figuren eine vereinfachte Darstellung gewählt, bei der nicht zum Verständnis beitragende Elemente weggelassen wurden.

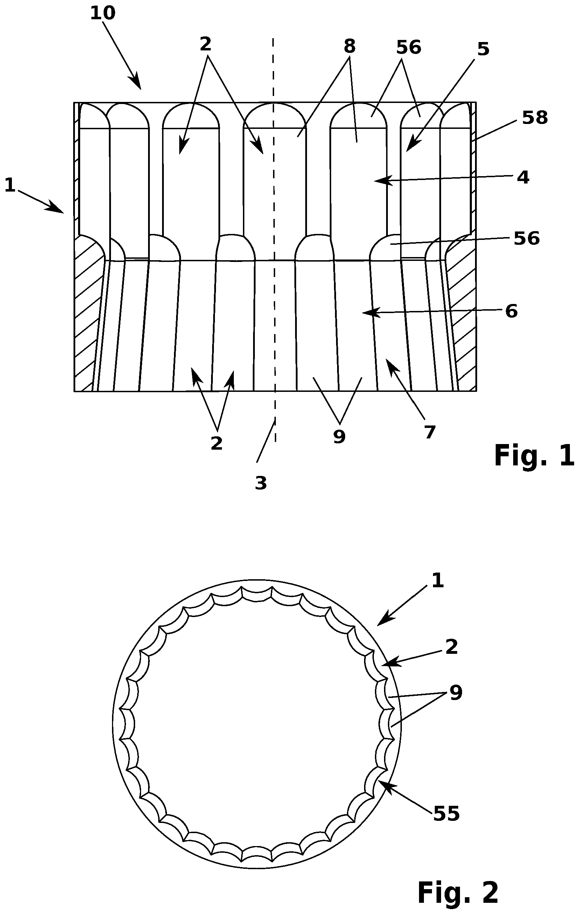

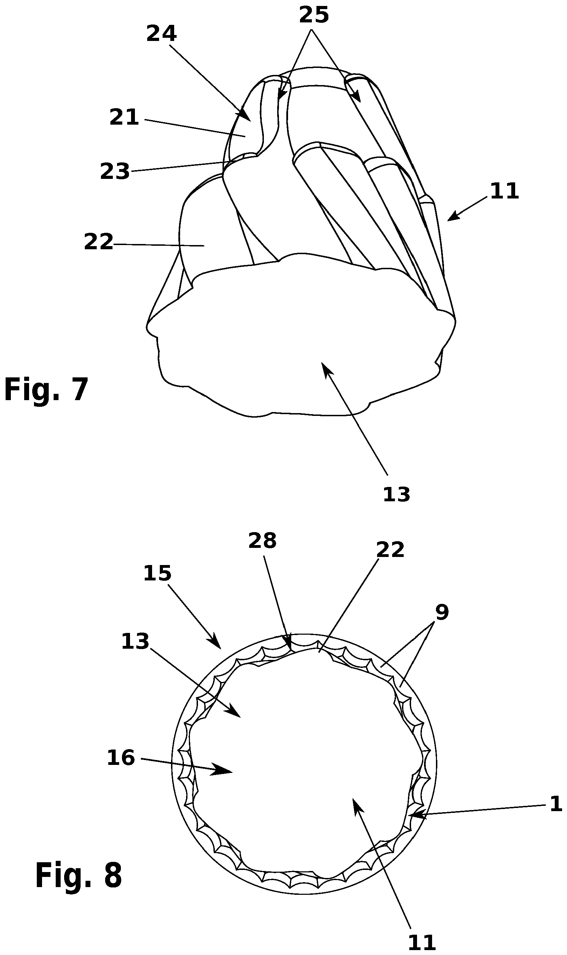

Fig. 1 zeigt einen Stator 1 eines erfindungsgemäßen Mahlwerks 15 (siehe Fig. 8) in Form eines Hohlzylinders im Längsschnitt. Der Stator 1 verfügt an einer Innenseite über eine Vielzahl an länglichen, konvex gekrümmten Mahlvorsprüngen 2, welche in ihrer Ausrichtung in Richtung einer Längsachse 3 des Stators 1 orientiert sind und sich über die gesamte Länge des Stators 1 erstrecken. Die Mahlvorsprünge 2 des Stators sind entlang ihrer gesamten Längsausdehnung im gesamten Querschnitt konvex gekrümmt und bilden keine spitzwinkeligen Hinterschneidungen und keine scharfen Kanten. Der Stator 1 ist im Wesentlichen in zwei Abschnitte unterteilt. Der obere Abschnitt 4 bildet einen Bereich 5 zur Grobvermahlung, der untere Abschnitt 6 einen Bereich 7 zur Feinvermahlung. Im Bereich 5 zur Grobvermahlung werden die Mahlvorsprünge 2 als erste Stator-Mahlvorsprünge 8 bezeichnet. Entsprechend werden die Mahlvorsprünge 2 im Bereich zur Feinvermahlung 7 als zweite Stator-Mahlvorsprünge 9 bezeichnet. Die ersten Stator-Mahlvorsprünge 8 sind zur Grobvermahlung voneinander beabstandet, während die zweiten Stator-Mahlvorsprünge 9 direkt aneinander angrenzen bzw. ineinander übergehen. Zudem sind die zweiten Stator-Mahlvorsprünge 9 zu einer Basisfläche 58 des Stators, welche der Innenfläche des Hohlzylinders entspricht, hingeneigt, sodass die zweiten Stator-Mahlvorsprünge 9 in Richtung der ersten Stator-Mahlvorsprünge 8 leicht ansteigen. Natürlich könnten auch die ersten Stator-Mahlvorsprünge 8 eine Neigung in Bezug auf die Basisfläche 58 aufweisen. Auch andere oder gar keine Neigungen sind möglich.

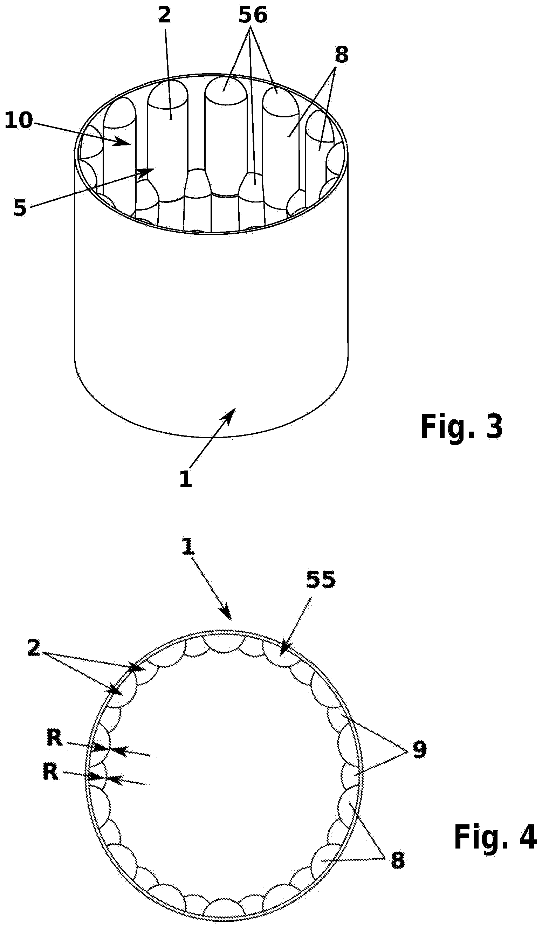

Wie insbesondere aus den Fig. 2 und Fig. 4 hervorgeht, stellen die Querschnitte der ersten 8 und zweiten Stator-Mahlvorsprünge 9 Kreissegmente dar. Das bedeutet, dass die Querschnittsfläche 55 der ersten 8 und zweiten Stator-Mahlvorsprünge 9 Kreissegmente, also von einem Kreisbogen und einer Kreissehne begrenzte Teilflächen einer Kreisfläche, darstellen. Der Radius R des Kreisbogens liegt in einem Bereich zwischen 0,1 mm und 70 mm, bevorzugt zwischen 0,15 mm und 60 mm, noch mehr bevorzugt zwischen 0,2 mm und 50 mm, zwischen 0,9 mm und 5 mm, oder, wie in der gezeigten Ausführungsform, bei 2 mm. Die Querschnitte der ersten 8 und zweiten Stator-Mahlvorsprünge 9 sind im Wesentlichen über ihre gesamte Länge konstant.

Wieder bezugnehmend auf Fig. 1 ist ersichtlich, dass die ersten Stator-Mahlvorsprünge 8 in die zweiten Stator-Mahlvorsprünge 9 übergehen. Darüber hinaus ist zu erkennen, dass die Anzahl der ersten Stator-Mahlvorsprünge 8 zur Anzahl der zweiten Stator-Mahlvorsprünge 9 im Verhältnis von 1:2 steht. D.h. es sind doppelt so viele zweite Stator-Mahlvorsprünge 9 wie erste Stator-Mahlvorsprünge 8 vorgesehen. Es kann aber auch ein höheres oder niedrigeres Verhältnis vorgesehen sein, solange die Anzahl an zweiten Stator-Mahlvorsprüngen 9 mindestens so hoch ist wie die Anzahl an ersten Rotor-Mahlvorsprüngen 8. Im Querschnitt bilden die ersten Stator-Mahlvorsprünge 8 Halbkreise, während die zweiten Stator-Mahlvorsprünge 9 kleinere Kreissegmente darstellen (siehe Fig. 2 und 4). An der einer Eingangsseite 10 zugewandten Stirnseiten 56 bilden sämtliche Mahlvorsprünge 2 des Stators 1 eine konvexe Krümmung in Form eines Ausschnitts einer Kugeloberfläche aus. Der Bereich 5 zur Grobvermahlung ist dabei der Eingangsseite 10 des Mahlwerks 15 zugeordnet.

Fig. 3 zeigt den Stator 1 in einer Schrägansicht von oben, d.h. eingangsseitig, wobei der Bereich 5 zur Grobvermahlung sichtbar ist.

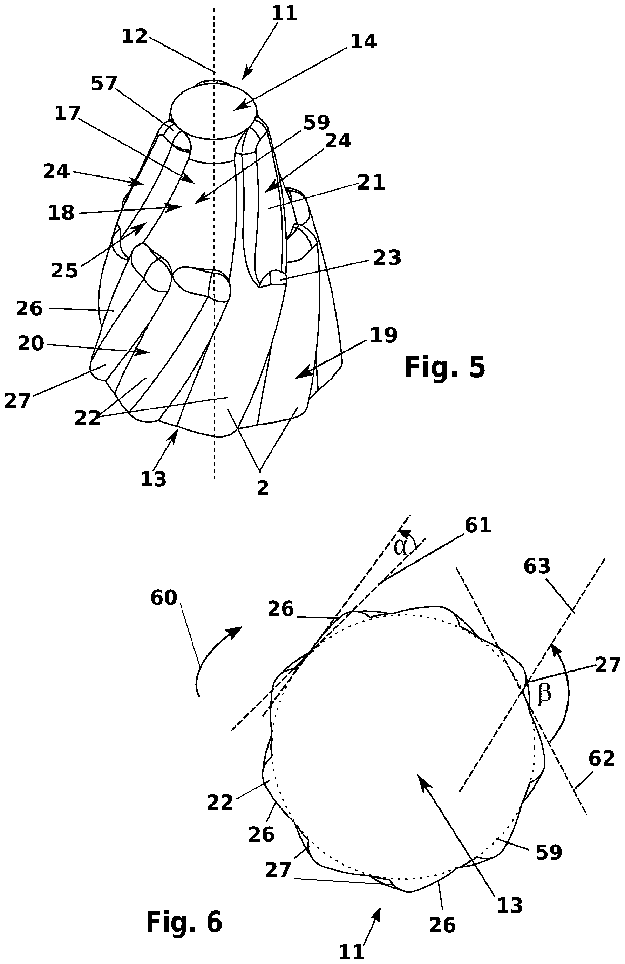

Fig. 5 zeigt einen im Wesentlichen kegelstumpfförmigen Rotor 11 in einer Schrägansicht von oben. An der Außenseite des Rotors 11 sind ebenfalls, ähnlich wie beim Stator 1, längliche, abschnittsweise konvex gekrümmte Mahlvorsprünge 2 vorgesehen, welche aber, im Unterschied zu den Mahlvorsprüngen 2 des Stators 1, schraubenlinienförmig um eine Längsachse 12 des Rotors 11 verdreht sind. Die Verdrehung um die Längsachse beträgt in der gezeigten Darstellung 65°. Es ist erkennbar, dass der Rotor 11 von einer Unterseite 13 zu einer Oberseite 14 konisch zusammenläuft. Beispielsweise beträgt der Durchmesser der Oberseite ca. 9,75 mm und der Durchmesser der Unterseite 22,8 mm. Im zusammengebauten Zustand des Mahlwerks 15 ist die Oberseite 14 der Eingangsseite 10 und die Unterseite einer Ausgangsseite 16 zugewandt.

Wie der Stator 1 ist auch der Rotor 11 in zwei Abschnitte unterteilt. Der obere Abschnitt 17 stellt einen Bereich 18 zur Grobvermahlung dar, der untere Abschnitt 19 stellt einen Bereich 20 zur Feinvermahlung dar. Im Bereich 18 zur Grobvermahlung werden die Mahlvorsprünge 2 als erste Rotor-Mahlvorsprünge 21 bezeichnet. Entsprechend werden die Mahlvorsprünge 2 im Bereich zur Feinvermahlung 20 als zweite Rotor-Mahlvorsprünge 22 bezeichnet. Die ersten Rotor-Mahlvorsprünge 21 sind zur Grobvermahlung voneinander beabstandet. Die Anzahl der ersten Mahlvorsprünge 21 des Rotors 11 zur Anzahl der zweiten Mahlvorsprünge 22 des Rotors 11 steht im Verhältnis 1:3, kann aber auch höher oder niedriger sein, solange die Anzahl der zweiten Rotor-Mahlvorsprünge 22 zumindest so hoch ist wie die Anzahl der ersten Rotor-Mahlvorsprünge 21.

Wie insbesondere aus den Fig. 5 und Fig. 7 hervorgeht, gehen die ersten Rotor-Mahlvorsprünge 21 in die zweiten Rotor-Mahlvorsprünge 22 über, wobei im Übergangsbereich eine konvex gekrümmte Kante 23 gebildet wird, deren Krümmungsradius bevorzugt mindestens 0,2 mm beträgt. Dort, wo die zweiten Rotor-Mahlvorsprünge 22 nicht in erste Rotor-Mahlvorsprünge 21 übergehen, wird ebenfalls eine konvex gekrümmte Kante, d.h. stumpfe Kante, gebildet. Die ersten Rotor-Mahlvorsprünge 21 weisen im Querschnitt jeweils einen ebenen Abschnitt 24 und zwei gegenüberliegende, an den ebenen Abschnitt angrenzende konvex gekrümmte Flanken 25 auf. Die konvex gekrümmten Flanken 25 schließen mit der Basisfläche 59 des Rotors einen Winkel von maximal 90° ein, sodass keine spitzwinkeligen Hinterschneidungen entstehen. Die Basisfläche 59 entspricht der Mantelfläche des Rotors ohne Mahlvorsprünge 2, also der Mantelfläche eines Kegelstumpfes. Sämtliche in Richtung der Oberseite 14 des Rotors 11 weisende Stirnseiten 57 der Mahlvorsprünge 2 des Rotors 11 sind zur Minimierung des Abriebs ebenfalls konvex gekrümmt.

Wie aus Fig. 6 ersichtlich, weisen die Querschnitte der zweiten Rotor-Mahlvorsprünge 22 einen im Wesentlichen eben ansteigenden Abschnitt 26 und einen konvex gekrümmten, abfallenden Abschnitt 27 auf. Die Drehrichtung 60 des Rotors 11 zum Mahlen erfolgt dergestalt, dass die konvex gekrümmten, abfallenden Abschnitte in Drehrichtung zuerst liegen. Der im Wesentlichen eben ansteigende Abschnitt 26 schließt von der Unterseite 13 her betrachtet an der Basisfläche 59 mit Tangente 61 an der Basisfläche 59 des Rotors 11 einen Winkel α in mathematisch positive Richtung von der Tangente 61 weggezählt von maximal 90°, besonders bevorzugt von maximal 45°, in der gezeigten Darstellung von 14°, ein. Die Tangente 61 tangiert die Basisfläche 59 dabei im Übergangsbereich zwischen dem eben ansteigenden Abschnitt 26 und der Basisfläche 59. Der Winkel α liegt quasi innerhalb des zweiten Rotor-Mahlvorsprunges 22 zwischen der Oberfläche des ansteigenden Abschnitts 26 und der Tangente an der Basisfläche 59. Strichliert ist zur besseren Darstellung des Winkels α eine gedachte Verlängerung des eben ansteigenden Abschnitts 26 eingezeichnet. In der in Fig. 6 gezeigten Draufsicht ist die Basisfläche 59 mittels eines strichlierten Kreises angedeutet.

Der konvex gekrümmte, abfallende Abschnitt 27 spannt von der Unterseite 13 betrachtet an der Basisfläche 59 mit einer Tangente 62 an der Basisfläche 59 des Rotors 11 einen Winkel *β* in mathematisch positive Richtung von der Tangente 62 weggezählt von minimal 90°, besonders bevorzugt von minimal 110°, in der gezeigten Ausführungsform von 122°, auf. Die Tangente 62 tangiert die Basisfläche 59 dabei im Übergangsbereich zwischen dem konvex gekrümmten, abfallenden Abschnitt 27 und der Basisfläche 59. Der Winkel β liegt quasi in Drehrichtung 60 vor dem Abschnitt 27 und damit außerhalb des zweiten Rotor-Mahlvorsprunges 22 und wird sozusagen von der Basisfläche 59 und der Oberfläche des Abschnitts 27 aufgespannt. Da der konvex gekrümmte, abfallende Abschnitt 27 gekrümmt ist, wird der Winkel β ebenfalls zu einer Tangente 63 an dem konvex gekrümmten Abschnitt 27 im Übergangsbereich zur Basisfläche 59 gezählt.

Fig. 7 zeigt den erfindungsgemäßen Rotor 11 in einer Schrägansicht von unten. Es ist erkennbar, dass die ersten Rotor-Mahlvorsprünge 21 in die zweiten Rotor-Mahlvorsprünge 22 übergehen.

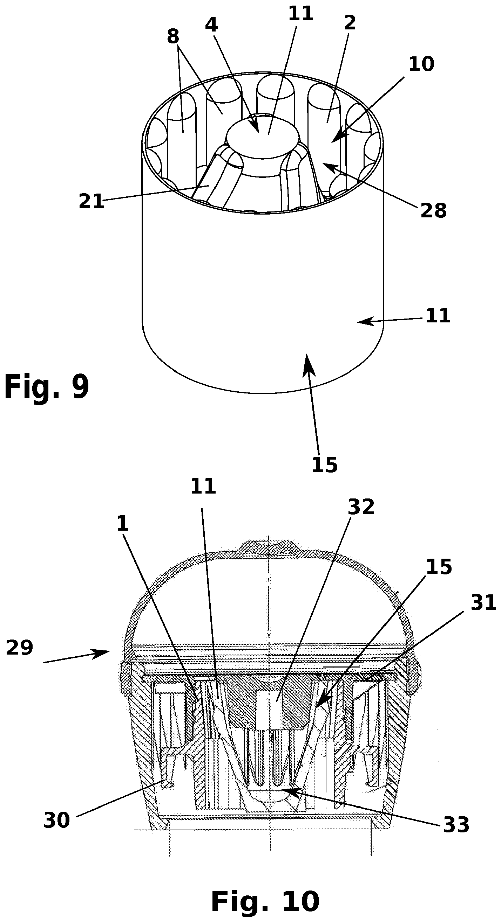

Fig. 8 und Fig. 9 zeigen schematisch den zusammengesetzten Zustand des erfindungsgemäßen Mahlwerks 15. Sämtliche Verbindungsteile wurden der Übersicht halber weggelassen. Der Rotor 11 ist dabei gänzlich in den Stator 1 eingefügt. Der Rotor 11 ist üblicherweise drehbar gelagert (nicht ersichtlich). Zwischen Rotor 11 und Stator 1 befindet sich ein Spalt 28, durch welchen das Mahlgut (nicht gezeigt) von der Eingangsseite 10 zur Ausgangsseite 16 gelangt und dabei zerdrückt wird. Der Spalt 28 variiert sowohl örtlich entlang des Umfangs, als auch zeitlich, wenn der Rotor 11 in Rotation versetzt wird. Der Spalt 28 variiert auch auf Grund der Kegelstumpfform des Rotors 11 zwischen der Eingangsseite 10 und der Ausgangsseite 16. Mit anderen Worten verjüngt sich der Spalt zunehmend von der Eingangsseite 10 zur Ausgangsseite 16.

Fig. 10 zeigt das erfindungsgemäße Mahlwerk 15 im Querschnitt. Das Mahlwerk 15 innerhalb eines Gehäuses 29 angeordnet und mit diesem über Befestigungsmittel 30 in Form von Rastnasen verbunden. Der Rotor 11 ist über vorzugsweise perforierte Kappe 31 mit dem Stator verbunden, wobei die Kappe 31 über einen zentral angeordneten Lagerstift 32 verfügt, welcher in eine Ausnehmung 33 des Rotors 11 eingreift. Der Rotor 11 kann dabei um den Lagerstift 32 rotieren, ist aber gegen Verschiebungen gesichert. Das Gehäuse 29 weist an einer Seite zudem Verbindungsmittel, beispielsweise ein Gewinde, zur Verbindung mit einem Behältnis (nicht gezeigt) für Gewürze auf.

## Patentansprüche

1. Mahlwerk (15) zum Zermahlen von Gewürzen, insbesondere Salz, mit einem Stator (1) und einem konzentrisch dazu angeordneten, drehbar gelagerten und im Wesentlichen kegelstumpfförmigen Rotor (11), **dadurch gekennzeichnet, dass** der Stator (1) und der Rotor (11) zumindest abschnittsweise im Querschnitt konvex gekrümmte Mahlvorsprünge (2) aufweisen, deren Oberflächen frei von Unstetigkeiten sind.

2. Mahlwerk (15) nach Anspruch 1, **dadurch gekennzeichnet, dass** die Querschnitte der Mahlvorsprünge (2) entlang der gesamten Längsausdehnung der Mahlvorsprünge (2) zumindest abschnittsweise konvex gekrümmt sind.

3. Mahlwerk (15) nach Anspruch 1 oder 2, **dadurch gekennzeichnet, dass** das Mahlwerk (15) eine Eingangsseite (10) und eine Ausgangsseite (16) für das Gewürz aufweist und der Eingangsseite (10) zugewandten Stirnseiten (56, 57) der Mahlvorsprünge (2) konvex gekrümmt sind.

4. Mahlwerk (15) nach einem der Ansprüche 1 bis 3, **dadurch gekennzeichnet, dass** der Rotor (11) und der Stator (1) derart angeordnet sind, dass zu jedem Zeitpunkt während des Verdrehens des Rotors (11) die Mahlvorsprünge (2) des Rotors (11) von den Mahlvorsprüngen (2) des Stators (1) beabstandet sind, insbesondere mindestens 0,1 mm beabstandet sind.

5. Mahlwerk (15) nach einem der Ansprüche 1 bis 4, **dadurch gekennzeichnet, dass** die Querschnitte der Mahlvorsprünge (2) des Stators (1) Kreissegmente darstellen, deren Radius in einem Bereich zwischen 0,1 mm und 70 mm, bevorzugt zwischen 0,15 mm und 60 mm, noch mehr bevorzugt zwischen 0,2 mm und 50 mm, liegt.

6. Mahlwerk (15) nach einem der Ansprüche 1 bis 5, **dadurch gekennzeichnet, dass** der Stator (1) in einen Bereich (5) zur Grobvermahlung mit ersten Stator-Mahlvorsprüngen (8) und einen Bereich (7) zur Feinvermahlung mit zweiten Stator-Mahlvorsprüngen (9) unterteilt ist, wobei vorzugsweise im Bereich (5) zur Grobvermahlung die ersten Stator-Mahlvorsprünge (8) voneinander beabstandet sind, vorzugsweise wobei das Verhältnis der Anzahl an ersten Stator-Mahlvorsprüngen (8) zur Anzahl an zweiten Stator-Mahlvorsprüngen (9) im Bereich zwischen 1:1 und 1:15, noch mehr bevorzugt zwischen 1:1 und 1:10, insbesondere bei 1:2, liegt.

7. Mahlwerk (15) nach einem der Ansprüche 1 bis 6, **dadurch gekennzeichnet, dass** der Rotor (11) eine Basisfläche (59) aufweist und in einen Bereich (18) zur Grobvermahlung mit ersten Rotor-Mahlvorsprüngen (21) und einen Bereich (20) zur Feinvermahlung mit zweiten Rotor-Mahlvorsprüngen (22) unterteilt ist, wobei vorzugsweise im Bereich (18) zur Grobvermahlung die ersten Rotor-Mahlvorsprünge (21) voneinander beabstandet sind, vorzugsweise wobei das Verhältnis der Anzahl an ersten Rotor-Mahlvorsprüngen (21) zur Anzahl an zweiten Rotor-Mahlvorsprüngen (22) im Bereich zwischen 1:1 und 1:15, noch mehr bevorzugt zwischen 1:1 und 1:10, insbesondere bei 1:3, liegt.

8. Mahlwerk (15) nach Anspruch 7, **dadurch gekennzeichnet, dass** die Querschnitte der zweiten Rotor-Mahlvorsprünge (22) einen im Wesentlichen eben ansteigenden Abschnitt (26) und einen konvex gekrümmten, abfallenden Abschnitt (27) aufweisen, und/oder dass die ersten Rotor-Mahlvorsprünge (21) im Querschnitt jeweils einen ebenen Abschnitt (24) und zwei gegenüberliegende, an den ebenen Abschnitt angrenzende konvex gekrümmte Flanken (25) aufweisen.

9. Mahlwerk (15) nach Anspruch 8, **dadurch gekennzeichnet, dass** die konvex gekrümmten Flanken (25) im Übergangsbereich zwischen den Flanken (25) und der Basisfläche (59) des Rotors (11) mit der Basisfläche (59) einen Winkel innerhalb der ersten Rotor-Mahlvorsprünge (21) aufspannen, der kleiner als 90° ist.

10. Mahlwerk nach Anspruch 8 oder 9, **dadurch gekennzeichnet, dass** der im Wesentlichen eben ansteigende Abschnitt (26) im Übergangsbereich zur Basisfläche (59) des Rotors (11) mit einer Tangente (61) an der Basisfläche (59) einen Winkel (α) in mathematisch positive Richtung von der Tangente (61) an der Basisfläche (59) weggezählt von maximal 90°, besonders bevorzugt von maximal 45°, noch mehr bevorzugt von maximal 20°, einschließt.

11. Mahlwerk nach einem der Ansprüche 8 bis 10, **dadurch gekennzeichnet, dass** der konvex gekrümmte, abfallende Abschnitt (27) im Übergangsbereich zur Basisfläche (59) des Rotors (11) mit einer Tangente (62) an der Basisfläche (59) einen Winkel (β) in mathematisch positive Richtung von der Tangente (62) an der Basisfläche (59) weggezählt von minimal 90°, besonders bevorzugt von minimal 100°, noch mehr bevorzugt von minimal 120° ein, maximal aber 180°, aufspannt.

12. Mahlwerk (15) nach einem der Ansprüche 1 bis 11, **dadurch gekennzeichnet, dass** die Mahlvorsprünge (2) des Rotors (11) schraubenlinienförmig um eine Längsachse (12) des Rotors (11) verdreht sind und/oder dass der Rotor (11) von einer Unterseite (13) zu einer Oberseite (14) hin konisch zusammenläuft.

13. Mahlwerk (15) nach einem der Ansprüche 1 bis 12, **dadurch gekennzeichnet, dass** die kleinste Krümmung der Querschnitte der Mahlvorsprünge (2) einen Kurvenradius R aufweist, der in einem Bereich zwischen 0,1 mm und 70 mm, bevorzugt zwischen 0,15 mm und 60 mm, noch mehr bevorzugt zwischen 0,2 mm und 50 mm oder 1 mm und 20 mm, liegt.

14. Mahlwerk (15) nach einem der Ansprüche 1 bis 13, **dadurch gekennzeichnet, dass** die kleinste Krümmung der Querschnitte der Mahlvorsprünge (2) des Stators (1) und/oder des Rotors (11) einen Kurvenradius R aufweist, der zumindest 0,5 mm, vorzugsweise zumindest 0,6 mm, zumindest 0,7 mm, zumindest 0,8 mm oder zumindest 0,9 mm beträgt.

15. Gewürzmühle zum Zermahlen von Gewürzen, insbesondere Salz, mit einem Behältnis für das Gewürz, **dadurch gekennzeichnet, dass** die Gewürzmühle ein Mahlwerk (15) nach einem der Ansprüche 1 bis 14 aufweist.

## Claims

1. Grinder (15) for grinding spices, in particular salt, having a stator (1) and a rotor (11) which is arranged concentrically thereto, is rotatably mounted and is substantially in the shape of a truncated cone, **characterised in that** the stator (1) and the rotor (11) have grinding projections (2) which are convexly curved in cross section at least in portions and the surfaces of which are free of discontinuities.

2. Grinder (15) according to claim 1, **characterised in that** the cross sections of the grinding projections (2) are convexly curved at least in portions along the entire longitudinal extent of the grinding projections (2).

3. Grinder (15) according to either claim 1 or 2, **characterised in that** the grinder (15) has an inlet side (10) and an outlet side (16) for the spice and end faces (56, 57) of the grinding projections (2) facing the inlet side (10) are convexly curved.

4. Grinder (15) according to any of claims 1 to 3, **characterised in that** the rotor (11) and the stator (1) are arranged in such a way that at any time during the turning of the rotor (11), the grinding projections (2) of the rotor (11) are spaced apart from the grinding projections (2) of the stator (1), in particular are spaced apart at least 0.1 mm.

5. Grinder (15) according to any of claims 1 to 4, **characterised in that** the cross sections of the grinding projections (2) of the stator (1) represent segments of a circle of which the radius is in a range between 0.1 mm and 70 mm, preferably between 0.15 mm and 60 mm, more preferably between 0.2 mm and 50 mm.

6. Grinder (15) according to any of claims 1 to 5, **characterised in that** the stator (1) is divided into a region (5) for coarse grinding with first stator grinding projections (8) and a region (7) for fine grinding with second stator grinding projections (9), the first stator grinding projections (8) preferably being spaced apart in the region (5) for coarse grinding, preferably the ratio of the number of first stator grinding projections (8) to the number of second stator grinding projections (9) being in the range between 1:1 and 1:15, more preferably between 1:1 and 1:10, in particular 1:2.

7. Grinder (15) according to any of claims 1 to 6, **characterised in that** the rotor (11) has a base surface (59) and is divided into a region (18) for coarse grinding with first rotor grinding projections (21) and a region (20) for fine grinding with second rotor grinding projections (22), the first rotor grinding projections (21) preferably being spaced apart in the region (18) for coarse grinding, preferably the ratio of the number of first rotor grinding projections (21) to the number of second rotor grinding projections (22) being in the range between 1:1 and 1:15, more preferably between 1:1 and 1:10, in particular 1:3.

8. Grinder (15) according to claim 7, **characterised in that** the cross sections of the second rotor grinding projections (22) have a substantially evenly rising portion (26) and a convexly curved falling portion (27), and/or **in that** the first rotor grinding projections (21) each have, in cross section, a flat portion (24) and two opposing convexly curved flanks (25) adjoining the flat portion.

9. Grinder (15) according to claim 8, **characterised in that** the convexly curved flanks (25), in the transition region between the flanks (25) and the base surface (59) of the rotor (11), form an angle of less than 90° with the base surface (59) within the first rotor grinding projections (21).

10. Grinder according to either claim 8 or claim 9, **characterised in that** in the transition region to the base surface (59) of the rotor (11), the substantially evenly rising portion (26) and a tangent (61) on the base surface (59) enclose an angle (α) of a maximum of 90°, particularly preferably a maximum of 45°, more preferably a maximum of 20°, counting in the mathematically positive direction away from the tangent (61) on the base surface (59).

11. Grinder according to any of claims 8 to 10, **characterised in that** in the transition region to the base surface (59) of the rotor (11), the convexly curved falling portion (27) and a tangent (62) on the base surface (59) enclose an angle (β) of a minimum of 90°, particularly preferably a minimum of 100°, more preferably a minimum of 120°, but a maximum of 180°, counting in the mathematically positive direction away from the tangent (62) on the base surface (59).

12. Grinder (15) according to any of claims 1 to 11, **characterised in that** the grinding projections (2) of the rotor (11) are twisted helically about a longitudinal axis (12) of the rotor (11) and/or **in that** the rotor (11) converges conically from a lower face (13) to an upper face (14).

13. Grinder (15) according to any of claims 1 to 12, **characterised in that** the smallest curvature of the cross sections of the grinding projections (2) has a curve radius R which is in a range between 0.1 mm and 70 mm, preferably between 0.15 mm and 60 mm, more preferably between 0.2 mm and 50 mm or 1 mm and 20 mm.

14. Grinder (15) according to any of claims 1 to 13, **characterised in that** the smallest curvature of the cross sections of the grinding projections (2) of the stator (1) and/or the rotor (11) has a curve radius R of at least 0.5 mm, preferably at least 0.6 mm, at least 0.7 mm, at least 0.8 mm or at least 0.9 mm.

15. Spice mill for grinding spices, in particular salt, having a container for the spice, **characterised in that** the spice mill has a grinder (15) according to any of claims 1 to 14.

## Revendications

1. Broyeur (15) pour moudre des épices, en particulier du sel, avec un stator (1) et un rotor (11) disposé concentriquement à celui-ci, monté rotatif et sensiblement tronconique, **caractérisé en ce que** le stator (1) et le rotor (11) comportent des saillies de mouture (2) incurvées de manière convexe en section transversale, au moins par sections, dont les surfaces sont exemptes de discontinuités.

2. Broyeur (15) selon la revendication 1, **caractérisé en ce que** les sections transversales des saillies de mouture (2) sont incurvées de manière convexe au moins par sections sur toute l'étendue longitudinale des saillies de mouture (2).

3. Broyeur (15) selon la revendication 1 ou 2, **caractérisé en ce que** le broyeur (15) comporte un côté d'entrée (10) et un côté de sortie (16) pour l'épice et les côtés frontaux (56, 57) des saillies de mouture (2) tournés vers le côté d'entrée (10) sont incurvés de manière convexe.

4. Broyeur (15) selon l'une des revendications 1 à 3, **caractérisé en ce que** le rotor (11) et le stator (1) sont agencés de telle manière qu'à chaque instant pendant la rotation du rotor (11) les saillies de mouture (2) du rotor (11) sont espacées des saillies de mouture (2) du stator (1), en particulier sont espacées d'au moins 0,1 mm.

5. Broyeur (15) selon l'une des revendications 1 à 4, **caractérisé en ce que** les sections transversales des saillies de mouture (2) du stator (1) représentent des segments de cercle dont le rayon est situé dans une plage entre 0,1 mm et 70 mm, de préférence entre 0,15 mm et 60 mm, de préférence encore entre 0,2 mm et 50 mm.

6. Broyeur (15) selon l'une des revendications 1 à 5, **caractérisé en ce que** le stator (1) est divisé en un domaine (5) pour la mouture grossière avec des premières saillies de mouture de stator (8) et un domaine (7) pour la mouture fine avec des secondes saillies de mouture de stator (9), où de préférence dans le domaine (5) pour la mouture grossière, les premières saillies de mouture de stator (8) sont espacées les unes des autres, de préférence où le rapport du nombre de premières saillies de mouture de stator (8) au nombre de secondes saillies de mouture de stator (9) est situé dans la plage entre 1:1 et 1:15, de préférence encore entre 1:1 et 1:10, en particulier à 1:2.

7. Broyeur (15) selon l'une des revendications 1 à 6, **caractérisé en ce que** le rotor (11) comporte une surface de base (59) et est divisé en un domaine (18) pour la mouture grossière avec des premières saillies de mouture de rotor (21) et un domaine (20) pour la mouture fine avec des secondes saillies de mouture de rotor (22), où de préférence dans le domaine (18) pour la mouture grossière les premières saillies de mouture de rotor (21) sont espacées les unes des autres, de préférence où le rapport du nombre de premières saillies de mouture de rotor (21) au nombre de secondes saillies de mouture de rotor (22) est situé dans la plage entre 1:1 et 1:15, de préférence encore entre 1:1 et 1:10, en particulier à 1:3.

8. Broyeur (15) selon la revendication 7, **caractérisé en ce que** les sections transversales des secondes saillies de mouture de rotor (22) comportent une section montante (26) sensiblement plane et une section descendante (27) incurvée de manière convexe, et/ou **en ce que** les premières saillies de mouture de rotor (21) comportent chacune en section transversale une section plane (24) et deux flancs incurvés de manière convexe (25) opposés contigus à la section plane.

9. Broyeur (15) selon la revendication 8, **caractérisé en ce que** les flancs incurvés de manière convexe (25) forment dans le domaine de transition entre les flancs (25) et la surface de base (59) du rotor (11) un angle avec la surface de base (59) à l'intérieur des premières saillies de mouture de rotor (21) qui est inférieur à 90°.

10. Broyeur selon la revendication 8 ou 9, **caractérisé en ce que** la section montante sensiblement plane (26) forme dans le domaine de transition vers la surface de base (59) du rotor (11) avec une tangente (61) à la surface de base (59) un angle (α) compté dans le sens mathématiquement positif à partir de la tangente (61) à la surface de base (59) d'au maximum 90°, de manière particulièrement préférée d'au maximum 45°, de préférence encore d'au maximum 20°.

11. Broyeur selon l'une des revendications 8 à 10, **caractérisé en ce que** la section descendante incurvée de manière convexe (27) forme dans le domaine de transition vers la surface de base (59) du rotor (11) avec une tangente (62) à la surface de base (59) un angle (β) compté dans le sens mathématiquement positif à partir de la tangente (62) à la surface de base (59) d'au minimum 90°, de manière particulièrement préférée d'au minimum 100°, de préférence encore d'au minimum 120°, mais d'au maximum 180°.

12. Broyeur (15) selon l'une des revendications 1 à 11, **caractérisé en ce que** les saillies de mouture (2) du rotor (11) sont torsadées en forme d'hélice autour d'un axe longitudinal (12) du rotor (11) et/ou **en ce que** le rotor (11) converge de manière conique d'un côté inférieur (13) vers un côté supérieur (14).

13. Broyeur (15) selon l'une des revendications 1 à 12, **caractérisé en ce que** la plus petite incurvation des sections transversales des saillies de mouture (2) comporte un rayon de courbure R qui est situé dans une plage entre 0,1 mm et 70 mm, de préférence entre 0,15 mm et 60 mm, de préférence encore entre 0,2 mm et 50 mm ou 1 mm et 20 mm.

14. Broyeur (15) selon l'une des revendications 1 à 13, **caractérisé en ce que** la plus petite incurvation des sections transversales des saillies de mouture (2) du stator (1) et/ou du rotor (11) comporte un rayon de courbure R qui est d'au moins 0,5 mm, de préférence d'au moins 0,6 mm, d'au moins 0,7 mm, d'au moins 0,8 mm ou d'au moins 0,9 mm.

15. Moulin à épices pour moudre des épices, en particulier du sel, avec un récipient pour l'épice, **caractérisé en ce que** le moulin à épices comporte un broyeur (15) selon l'une des revendications 1 à 14.
